# EUROPÄISCHE PATENTANMELDUNG

(11) **EP 2 369 265 A2**
(43) Veröffentlichungstag der Anmeldung: **28.09.2011**
(21) Anmeldenummer: 11158009.8
(22) Anmeldetag: 14.03.2011
(51) Int. Cl.: F24J 2/46, F24J 2/26

(54) **Solarkollektor mit einem Wellrohr und Anschlüssen**

(30) Priorität: 12.03.2010 DE 102010011337
(71) Anmelder: Solvis GmbH & Co. KG, 38112 Braunschweig (DE)
(72) Erfinder: Beutler, Timm, 38114 Braunschweig (DE); Wendker, Kai, 38106 Braunschweig (DE)
(74) Vertreter: Einsel, Martin

(57) **Zusammenfassung**

Ein Solarkollektor (10, 10a, 10b) besitzt ein Gehäuse (11, 11a, 11b). Darin befindet sich eine Absorberplatte (12), Absorberrohre (13), die mit der Absorberplatte (12) wärmeleitend verbunden sind, sowie zwei Sammlerrohre (14, 14a, 14b), zwischen denen die Absorberrohre (13) verlaufen und die ein Fluid in den Solarkollektor (10, 10a, 10b) hinein und aus diesem heraus führen. Außerdem ist eine Verbindungsmöglichkeit von den Sammlerrohren (14) zu den Sammlerrohren (14) in einem der benachbarten Solarkollektoren (10, 10a, 10b) vorgesehen. Jedes Sammlerrohr (14, 14a, 14b) ist in einem Längenabschnitt (24, 24a, 24b) innerhalb und unmittelbar angrenzend am Gehäuse (11) des Solarkollektors (10, 10a, 10b) als flexibles Wellrohr ausgeführt. Der als flexibles Wellrohr ausgeführte Längenabschnitt (24, 24a, 24b) des durch die Gehäusewand führenden Sammlerrohrs (14, 14a, 14b) erstreckt sich von der Innenwand des Gehäuses (10) bis zum Abzweig des ersten Absorberrohrs (13) von dem jeweiligen Sammlerrohr (14, 14a, 14b) oder über eine Teilstrecke davon. Auf der Außenseite des Gehäuses (11) des Solarkollektors (10, 10a, 10b) ist ein fester Anschluss (25, 25a, 25b) vorgesehen, welcher direkt an den als Wellrohr ausgeführten Längenabschnitt (24, 24a, 24b) des Sammlerrohrs (14, 14a, 14b) mit der Zwischenschaltung der Gehäusewandung (11) anschließt.

## Beschreibung

Die Erfindung betrifft einen Solarkollektor mit einem Gehäuse, mit einer Absorberplatte, mit Absorberrohren, die mit der Absorberplatte wärmeleitend verbunden sind, mit zwei Sammlerrohren, zwischen denen die Absorberrohre verlaufen und die ein Fluid in den Solarkollektor hinein und aus diesem heraus führen, sowie mit einer Verbindungsmöglichkeit von den Sammlerrohren zu den Sammlerrohren in einem der benachbarten Solarkollektoren, unter Verwendung eines als Wellrohr ausgebildeten Abschnittes.

Auf Dächern von Gebäuden werden zunehmend Sonnenkollektoranlagen installiert. Sonnen- oder auch anders bezeichnet Solarkollektoranlagen nutzen die Einstrahlung der Sonne, um diese in Wärmeenergie umzusetzen und damit ein Fluid aufzuheizen, das dann wiederum anschließend in einer Heizungs- oder Nutzwasserleitung weitergeleitet und zur Heizung des Gebäudes oder anderen Zwecken als erwärmtes Fluid verwendet wird.

Eine derartige Anlage besteht üblicherweise aus mehreren Einzelelementen. Jedes Einzelelement ist ein Solarkollektor oder auch Solarkollektor. Ein Solarkollektor weist ein Gehäuse auf, in welchem eine Absorberplatte, mehrere Absorberrohre und schließlich Sammlerrohre untergebracht sind. Es werden mehrere derartige Solarkollektoren auf einem Dach für eine Anlage eingesetzt, um eine Serienfertigung der Solarkollektoren bereitstellen zu können und verschieden große Dächer dadurch mit unterschiedlich großen Sonnenkollektoranlagen ausstatten zu können.

Für eine Sonnenkollektoranlage müssen diese einzelnen Solarkollektoren geeignet zusammengeschaltet werden, da im Ergebnis nur möglichst wenige Leitungen auf das Dach beziehungsweise vom Dach zur Heizungsanlage geführt werden sollen. Die Solarkollektoren werden dabei in Reihe oder auch parallel geschaltet.

Eine Wärmeträgerflüssigkeit strömt beispielsweise parallel durch die Absorberrohre aller Solarkollektoren, wenn diese parallel geschaltet sind.

Für das Verbinden der Kollektoren ist üblicherweise eine Anschlussverschraubung mit einem Verbindungsrohr vorgesehen. Man versucht, diese Verbindungsrohre vergleichsweise kurz auszuführen. Grundsätzlich bestünde ja auch die Möglichkeit, die Sammlerrohre ganz oder teilweise außerhalb der Gehäuse der einzelnen Solarkollektoren zu führen. Es wird aber im allgemeinen bevorzugt, sie im Gehäuse zu führen, da dies zum Einen eine einfachere Vormontage der Solarkollektoren mit dem Gehäuse und den verschiedenen Elementen innerhalb des Gehäuses ermöglicht und natürlich die Gehäuse auch einen gewissen Schutz gegenüber äußeren Belastungen bieten, die sonst auf die Rohre wirken würden.

In thermischen Flachkollektoren mit selektiven Absorbern können allerdings ganz erhebliche Stillstandtemperaturen von bis zu 250 °C auftreten. Setzt man hier eine starre Verschraubung als Verbindung von zwei oder mehreren Kollektoren ein, so entstehen erhebliche Spannungen aufgrund von Längenausdehnungen der einzelnen Absorber. Die Kollektorgehäuse sind fix auf dem Dach montiert und können daher nicht ausweichen.

Insbesondere bei größeren Kollektorfeldern von Kollektoren mit starren Sammlern hat dieses Verhalten in der Vergangenheit schon zu erheblichen Schäden durch Spannungsrisse geführt.

Um dies zu vermeiden, werden bereits in der DE 196 46 001 C2 und der EP 0 841 523 A2 oder in anderer Form auch in der US-PS 3 916 871 Anschlüsse vorgeschlagen, die nicht starr sind, sondern außen am Gehäuse des Solarkollektors Wellrohranschlüsse oder Ausdehnungsmöglichkeiten vorsehen.

Ein weiterer Vorschlag aus der US-PS 4,046,136 regt an, bei einem Röhrenkollektor innerhalb von Sammlerrohren eine Vielzahl von Abschnitten mit Bälgen oder Dehngefäßen vorzusehen, um der thermischen Expansion oder Kontraktion der Fluide in den Rohren Rechnung zu tragen. Dies ist technisch sehr schwer zu realisieren, da die mit Bälgen versehenen, gewissermaßen gewellten Abschnitte abschnittsweise in Teilstücke der Rohre eingesetzt und dort fluiddicht befestigt werden müssen. Die Expansions- und Konstruktionsbewegungen des Gesamtsystems werden dadurch unübersichtlich und schwer vorherzusehen. Die große Vielzahl an Befestigungspunkten der gewellten Rohrabschnitte zwischen nicht gewellten Rohrabschnitten ist sehr fehleranfällig, gerade im Hinblick auf die hohen möglichen Temperaturunterschiede und die auftretenden Expansions- und Konstruktionskräfte.

Trotz dieser Vorschläge bleibt daher der Verbindungsbereich mehrerer Solarkollektoren in Sonnenkollektoranlagen problematisch und es wäre wünschenswert, noch andere Möglichkeiten für eine Verbindung von Solarkollektoren in Solarkollektoranlagen zu haben.

Aufgabe der Erfindung ist es daher, eine derartige Möglichkeit vorzuschlagen.

Diese Aufgabe wird mit der Erfindung bei einem gattungsgemäßen Solarkollektor dadurch gelöst, dass jedes durch die Gehäusewandung geführte Sammlerrohr in einem Längenabschnitt innerhalb und unmittelbar angrenzend am Gehäuse des Solarkollektors als flexibles Wellrohr ausgeführt ist, dass der als flexibles Wellrohr ausgeführte Längenabschnitt des Sammlerrohrs sich von der Innenwand des Gehäuses bis zum Abzweig des ersten Absorberrohrs von dem jeweiligen Sammlerrohr oder über eine Teilstrecke davon erstreckt, und dass in der Gehäusewandung oder auf der Außenseite des Gehäuses des Solarkollektors ein fester Anschluss vorgesehen ist, welcher direkt oder unter Zwischenschaltung der Gehäusewandung an den als Wellrohr ausgeführten Längenabschnitt des Sammlerrohrs anschließt.

Der Erfindungsgedanke basiert darauf, zwar wie in der DE 196 46 001 C2 ein Wellrohr einzusetzen, aber von dem bisherigen bindenden Gedanken abzusehen, diese Wellrohre als Anschluss einzusetzen.

Stattdessen werden zwei Edelstahlwellrohrelemente innerhalb des Kollektors angeordnet und in dem Sammler des Absorbers an zwei definierten Positionen integriert.

Da nur zwei gewellte Rohrabschnitte in jedem Solarkollektor eingesetzt werden und diese an das Gehäuse angrenzen, sind alle auftretenden Kräfte, Bewegungen und temperaturbedingten Längenänderungen der beteiigten Bauelemente vorhersehbar und definiert und es treten auch keine Probleme wie in der US-PS 4,046,136 mit einer Vielzahl von Befestigungspunkten von Wellrohrabschnitten mit anderen Rohrabschnitten auf.

Bei einigen Ausführungsformen ist außerdem vorgesehen, das Absorberdesign gegenüber bisherigen Absorbern abzuwandeln. Dabei wird an der Stelle des Wellrohrelementes am Kollektoranschluss das Verbindungsrohr zwischen den beiden Sammlern eines Kollektors mit einem Radius versehen und S-förmig am Wellrohrelement vorbeigeführt.

Die Anschlüsse der Kollektoren sind im Gegensatz zur herkömmlichen Kollektorherstellung jeweils fest am Kollektorgehäuse montiert. Mit dem Wellrohr-Dehnungselement im Inneren des Solarkollektors wird die Längenkompensation innerhalb des jeweiligen Kollektorgehäuses ausgeglichen.

Aus der festen Montage im Kollektor ergeben sich erhebliche Montagevorteile beim Zusammenbau des Kollektors am Montageort, also etwa auf dem Dach eines Gebäudes, an dem unter Umständen ungünstige Witterung eine komplexere Tätigkeit erschweren kann.

Für den Handwerker ergibt sich auch die Möglichkeit einer vereinfachten werkzeuglosen Kollektormontage, beispielsweise in einer bevorzugten Ausführungsform über eine formschlüssige "Plug & Play"-Gehäuseverbindung. Damit kann zugleich auch eine sehr gute Dichtigkeit der Kollektorzwischenräume erreicht werden.

Eine derartige Verbindung kann besonders zweckmäßig und zuverlässig mit Anschlüssen der Kollektoren erreicht werden, welche auf der einen Seite ein aus dem Gehäuse des Solarkollektors herausragendes Rohrelement mit auf diesem angeordneten Dichtelementen aufweist, und auf der anderen Seite des Solarkollektors einen Anschluss mit einem erweiterten Rohrelement aufweist, welches über den ersten Anschluss - natürlich eines anderes Solarkollektors - schiebbar ist, wobei die Dichtelemente zwischen dem Außenumfang des ersten Anschlusses und dem inneren Durchmesser des erweiterten Rohrelementes des zweiten Abschlusses abschließen, und wobei ein Befestigungselement eine Verschiebung der beiden Rohrelemente unterbindet.

Als Dichtelement werden dabei bevorzugt O-Ringe gewählt. Diese sind besonders geeignet für einen dichten Abschluss zwischen den beiden nach der Verbindung konzentrischen Rohrstücken, sie sind zuverlässig und vergleichsweise kostengünstig und sie gestatten relativ problemlos das Übereinanderschieben der beiden Rohrstücke.

Besonders bevorzugt ist es, wenn auf dem inneren Rohrstück oder Rohrelement des ersten Anschlusses drei O-Ringe gleichen Typs in entsprechenden Abständen voneinander angeordnet sind.

Dies hat den Vorteil, dass der mittlere O-Ring durch die beiden äußeren O-Ringe von der Einwirkung von Sauerstoff zuverlässig geschützt wird. Zu berücksichtigen ist, dass in diesem Bereich wie erwähnt hohe Temperaturen von bis zu 220°C auftreten können. Bei einer direkten Inbetriebnahme unmittelbar nach einer Montage der Solarkollektoren würden auch zwei O-Ringe an sich ausreichen, da dann der äußere O-Ring als Sauerstoffbarriere dienen könnte. In der Praxis kann es jedoch vorkommen, dass ein Solarkollektor über einen längeren Zeitraum von etwa einem halben Jahr unbefüllt, jedoch von der Sonne beschienen auf einem Dach liegt. In diesem Fall würde auch die Fluidseite des aus den beiden Anschlüssen gebildeten Steckers mit Sauerstoff und hoher Temperatur beaufschlagt werden, wodurch dann beide O-Ringe zerstört werden könnten.

Dadurch, dass bevorzugt drei O-Ringe vorgesehen werden, ist eine entsprechende Beaufschlagung jedoch nur von den beiden äußeren O-Ringen zu erwarten, so dass auf jeden Fall und auch unter ungünstigsten Bedingungen der mittlere O-Ring vor den erwähnten Beanspruchungen geschützt ist und daher dauerhaft seiner Aufgabe nachkommen kann.

Bewährt hat es sich, wenn für den ersten Anschluss ein rohrförmiges Drehteil verwendet wird, welches auf seinem äußeren Umfang die bevorzugt vorgesehenen drei O-Ringe trägt. An das Drehteil kann das erfindungsgemäße Wellrohrelement beziehungsweise das an dieser Position vorzusehende Wellrohrelement angelasert sein. Daran wiederum würde bevorzugt eine Muffe angelasert, wobei alle vorstehend erwähnten Elemente aus Edelstahl bestehen.

In der Muffe würde bevorzugt das Sammlerrohr in angelöteter Form stecken.

Auf der anderen Seite dieses oder in anderen Ausführungsformen eines versetzten Sammlerrohres würde der zweite Anschluss vorgesehen. Dieser stellt eine Rohraufweitung dar, die wie eine Tulpe wirkt.

Das bedeutet, dass bei zwei benachbarten Kollektoren eine direkte Verbindung miteinander in sehr einfacherer Form mittels Plug & Play realisiert werden kann. Der eine Anschluss mit dem Rohrelement mit den drei O-Ringen des einen Kollektors würde in die tulpenförmige Rohraufweitung des zweiten Anschlusses des zweiten Solarkollektors gesteckt.

Jetzt wird noch ein Befestigungselement um oder auf diese beiden Anschlüsse nach ihrer Verbindung gesteckt oder gesetzt, so dass eine absolut dichte Verbindung von den beiden Solarkollektoren hergestellt wird.

Bei einer späteren Wartung, Reparatur oder einem Austausch eines Solarkollektors müsste lediglich das Befestigungselement entfernt und der eine Anschluss aus dem anderen herausgezogen werden.

Als Befestigungselement hat es sich besonders bewährt, wenn eine Schellenverriegelung eingesetzt wird, wie sie in anderem Zusammenhang aus der DE 10 2009 024 813 A1 und der EP 2 261 544 A2 bekannt ist. Diese Verriegelung kann zugleich sicher verhindern, dass Teile eingesteckt werden, die nicht zueinander passen.

Bei einer einfacheren Ausführungsform kann die Verbindung der Kollektoren auch über ein Verbindungselement, beispielsweise mittels einer einfachen Überwurfmutterverschraubung, erfolgen, was besonders kostengünstig ist.

Eine solche Möglichkeit würde beispielsweise durch ein Außengewinde auf der Seite des einen Anschlusses und eine Überwurfmutter auf der Seite des anderen Anschlusses verwenden. Insbesondere eine flachdichtende Gestaltung ist dabei interessant. Eine derartige Verbindung zweier Solarkollektoren hat den Nachteil gegenüber der vorstehenden Lösung mittels Plug & Play, dass sie schwerer wieder zu lösen ist, insbesondere im Vergleich zu der erwähnten Schellenverriegelung. Sie hat den Vorteil, dass die Solarkollektoren bei einem Kollektortausch nicht auseinander geschoben werden müssen.

Wie sich herausgestellt hat, lassen sich auch feste Kupferrohre und feste Aluminiumrohre innerhalb des Solarkollektors mit flexiblen Edelstahlwellrohrelementen über eine Laserschweißverbindung in einem Herstellungsverfahren ohne Verbindungswerkstoff realisieren. Dies reduziert die Probleme in den Sammlerrohren zusätzlich.

Im Folgenden werden anhand der Zeichnung zwei Ausführungsbeispiele der Erfindung sowie einige bevorzugte Details näher erläutert. Es zeigen:
- **Figur 1**: eine schematische Darstellung einer ersten Ausführungsform der Erfindung mit einer Solarkollektoranlage mit mehreren Solarkollektoren;
- **Figur2**: eine schematische Darstellung einer alternativen Ausführungsform der Erfindung mit einer Solarkollektoranlage mit mehreren Solarkollektoren;
- **Figur 3**: eine vergrößerte Darstellung des Durchtrittsbereiches eines Sammelrohrs durch das Gehäuse eines Solarkollektors; und
- **Figur 4**: eine wiederum vergrößerte Schnittdarstellung der Bereiche aus Figur 3.

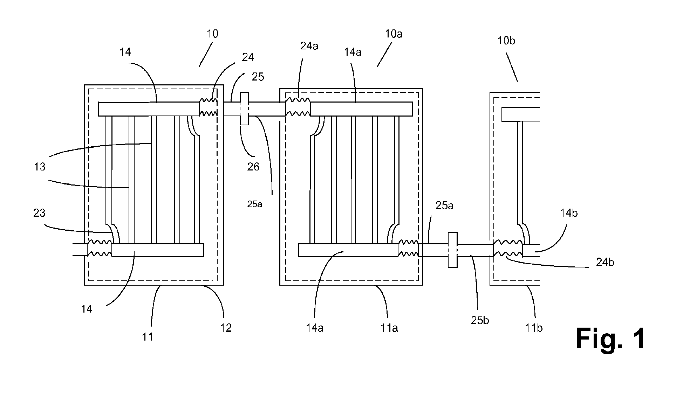

In der **Figur 1** sieht man schematisch ein Feld mit drei aneinander angrenzenden Solarkollektoren 10 beziehungsweise 10a und 10b. Die drei Solarkollektoren 10, 10a und 10b können technisch untereinander identisch aufgebaut sein und sind lediglich als ein Beispiel oder Ausschnitt aus einer größeren Solarkollektoranlage zu verstehen, die sich links und rechts von den drei dargestellten Solarkollektoren fortsetzen kann, ebenso auch unterhalb oder oberhalb der dargestellten Solarkollektoren 10, 10a und 10b.

Man blickt also gewissermaßen auf ein Dach eines Gebäudes (beide nicht dargestellt).

Betrachtet man sich nun einen Solarkollektor 10 (oder auch 10a, 10b) näher, so weist der Solarkollektor jeweils ein Gehäuse 11 auf. Das Gehäuse 11 weist auf den Betrachter zu eine (nicht dargestellte und für Sonneneinstrahlung durchlässige Abdeckung) auf, etwa eine Glasplatte. Diese Abdeckung schützt den Solarkollektor 10, 10a, 10b gegenüber äußeren Witterungseinflüssen, etwa gegenüber Regen.

Vom Betrachter aus gesehen folgt hinter der Abdeckung ein Absorberblech 12. Dieses Absorberblech 12 ist bei einem der drei dargestellten Solarkollektoren, nämlich dem Solarkollektor 10, gestrichelt angedeutet, jedoch im Übrigen und bei den beiden weiteren dargestellten Solarkollektoren ganz weggelassen, um den inneren Aufbau besser darstellen zu können. Dieses Absorberblech 12 nimmt die Sonneneinstrahlung auf und wandelt sie in Wärme um.

Mit den Absorberplatten 12 insbesondere gut wärmeleitend verbunden sind auf der vom Betrachter abgewandten Seite des Absorberblechs 12 angeordnete Absorberrohre 13. Derartige Absorberrohre 13 sind in jedem Solarkollektor 10, 10a, 10b mehrfach vorgesehen, in der dargestellten Ausführungsform jeweils fünf Stück. Natürlich sind auch andere Anzahlen möglich und es ist auch nicht zwingend, dass die Absorberrohre 13 alle parallel laufen müssen.

Allerdings wird dies vorteilhafterweise angestrebt, um eine möglichst gleichmäßige Ausnutzung der in den Absorberblechen 12 umgewandelten Sonnenenergie bei der Übertragung in Fluide zu nutzen, die sich in den Absorberrohren 13 befinden und durch diese strömen.

Wie man in der Darstellung sieht, verlaufen die Absorberrohre 13 jeweils zwischen zwei Sammlerrohren 14. Die einzelnen Absorberrohre 13 verlaufen also parallel geschaltet zwischen den Sammlerrohren 14.

Die Sammlerrohre dienen dazu, die Fluide aus den einzelnen Absorberrohren 13 zu sammeln und gemeinsam aus einem Solarkollektor 10, 10a, 10b abzuführen beziehungsweise ein Fluid geschlossen in einen Solarkollektor 10, 10a, 10b hinein zu führen und dort als Verteiler auf die einzelnen Absorberrohre 13 zu verteilen.

Man sieht auch, dass der Inhalt eines Sammlerrohres 14 aus einem Solarkollektor in ein Sammlerrohr 14 aus dem benachbarten Solarkollektor überführt wird. Dabei wird konstruktiv zweckmäßig ein axialer Anschluss zwischen den beiden Sammlerrohren 14 des Solarkollektor 10 und des Sammlerrohres 14a des Solarkollektors 10a vorgenommen.

Die jeweils zweiten Sammlerrohre der beiden Solarkollektoren 10 und 10a werden dabei nicht verbunden, sondern statt dessen das andere Sammlerrohr 14a des Solarkollektors 10a dann wiederum mit einem Sammlerrohr 14b des Solarkollektors 10b verbunden.

Dadurch ergibt sich also jeweils ein paarweiser Zusammenschluss abwechselnd auf der oberen Seite beziehungsweise auf der unteren Seite der jeweils benachbarten Solarkollektor, wenn man die Angaben "oben" und "unten" auf die Anordnung auf dem Dach des Gebäudes bezieht. Diese kann man sich in der Figur 1 ebenso in der Zeichnung dargestellt vorstellen.

Das bedeutet, dass insgesamt in der dargestellten Ausführungsform das aufzuwärmende Fluid zunächst von links unten in das untere Sammlerrohr 14 des linken Solarkollektors 10 strömt, dort auf die Absorberrohre 13 verteilt wird, durch diese zum oberen Sammlerrohr 14 strömt und dort wieder gesammelt wird, um dann in das rechts davon liegende obere Sammlerrohr 14a des zweiten Solarkollektors 10a zu gelangen. Dort wird das Fluid auf die Absorberrohre 13a verteilt und strömt zum unteren Sammlerrohr 14a um dort wieder gesammelt zu werden.

Von hier strömt das Fluid nach rechts in das untere Sammlerrohr 14b des dritten Solarkollektors 10b und strömt dort wiederum durch die Absorberrohre nach oben, und so fort.

Auf diese Weise kann die Wärmeenergie sämtlicher Absorberbleche 12 aus allen Solarkollektoren 10 genutzt werden, die es nacheinander durchströmt.

Um nun die nebeneinander liegenden Solarkollektor 10, 10a, 10b funktionell miteinander verbinden zu können, muss also insbesondere eine Möglichkeit geschaffen werden, das Fluid aus einem Sammlerrohr 14 in das achsial anschließende und unmittelbar benachbarte Sammlerrohr 14a des daneben liegenden Solarkollektors 10a überleiten zu können. Ebenso muss dann eine Möglichkeit gefunden werden, das Fluid aus dem unteren Sammlerrohr 14a des zweiten Solarkollektors 10a in den achsial unmittelbar anschließenden und rechts daneben dargestellten Solarkollektor 10b beziehungsweise dessen unteres Sammlerrohr 14b strömen zu lassen.

Diese Verbindung muss einerseits dicht sein und andererseits dem Umstand Rechnung tragen können, dass die Temperaturen nicht nur der Fluide in den Sammlerrohren 14, 14a, 14b, sondern auch die Temperaturen dieser Sammlerrohre 14, 14a, 14b außerordentlich unterschiedlich sein kann und somit die thermisch bedingte Kontraktion und Expansion der Sammlerrohre in ihrer eigenen achsialen Längsrichtung zu ganz erheblichen Längenunterschieden führen kann.

Während etwa in der Konzeption nach der DE 196 46 001 C2 diesem Umstand dadurch Rechnung getragen wird, dass Ausgangsanschlüsse der Sammlerrohre von zwei benachbarten Solarkollektoren mittels eines dazwischen geschalteten Wellrohrs verbunden und somit die thermische Expansion durch das dazwischen geschaltete Wellrohr aufgefangen wird, geht die in der Figur 1 dargestellte Ausführungsform der vorliegenden Erfindung davon ab.

Stattdessen wird ein Längenabschnitt eines jeden Sammlerrohres 14, 14a, 14b innerhalb des jeweiligen Gehäuses 11, 11a, 11 b eines jeden Solarkollektors 10, 10a, 10b als Wellrohrabschnitt ausgeführt.

Es handelt sich um den Längenabschnitt 24, 24a, 24b, der sich unmittelbar an dem Gehäuse 11, 11a, 11 b des jeweiligen Solarkollektors 10, 10a, 10b anschließt und nach innen führt. Der Längenabschnitt 24, 24a, 24b erstreckt sich längstens bis hin zum ersten vom jeweiligen Sammlerrohr 14, 14a, 14b abzweigenden Absorberrohr 13.

Das Sammlerrohr 14, 14a, 14b mit den Längenabschnitten 24, 24a, 24b schließt sich somit fest am Gehäuse 11, 11a, 11b an und entfaltet seine Expansionsbeziehungsweise Kontraktionsbewegungen nur innerhalb des Gehäuses 10. Das bedeutet im Umkehrschluss, dass aus dem Gehäuse 10 ein fester Anschluss 25, 25a, 25b herausragt.

Dadurch wird es möglich, zwei unmittelbar nebeneinander liegenden Solarkollektoren 10, 10a beziehungsweise 10a, 10b an ihren Anschlüssen 25, 25a beziehungsweise 25a, 25b jeweils mit einem Verbindungselement 26, etwa einer Überwurfmutter, einfach und fest sowie sicher zu verbinden.

Der Monteur auf dem Dach des Gebäudes hat also nicht mehr das Problem, Wellrohre in irgendeiner Form möglichst geschickt zu verbinden oder abzuschätzen, ob sich diese nun gerade in einem entspannten oder gespannten Zustand befinden, sondern er hat nur noch mit kurzen, definierten festen und stabilen Anschlüssen zu tun, die er nur direkt aneinander legen und mittels einer Überwurfmutter verbinden muss.

Bei einer genaueren Betrachtung der Darstellung in Figur 1 sieht man, dass aus praktischen technischen Gründen die Längenabschnitte 24, 24a und 24b der Sammlerrohre 14, 14a und 14b in der Wellrohrform etwas länger ausgeführt sind, als der Abstand des ersten abzweigenden Absorberrohrs 13 vom Gehäuse 10 im unbeeinflussten Zustand eigentlich wäre.

Dadurch wird berücksichtigt, dass eine hinreichende Längserstreckung des Sammlerrohres in Form eines Wellrohres gegeben ist, um allen Expansions-und Kontraktionsanforderungen Rechnung tragen zu können, ohne eine unnötige Spannung hervor zu rufen.

Dies wird technisch ganz einfach dadurch gelöst, dass die der Innenwand des Gehäuses 11 am dichtesten benachbart liegenden Absorberrohre 13 kurz vor Erreichen des Sammlerrohres 14 in einer leichten Biegung 23 oder in anderer geeigneter Form vom Gehäuse 10 weg führen und dadurch in einem etwas größeren Abstand vom Gehäuse 10 in das Sammlerrohr 14 münden.

Wie man in der Figur 1 auch sieht, sind die einzelnen Solarkollektoren 10, 10a, 10b symmetrisch derart, dass sie bei einer Drehung um 180° um eine Mittelsenkrechte durch die Fläche des Absorberbleches 12 wieder auf sich selbst fallen. Das bedeutet, dass die Einzelelemente, einschließlich der einzelnen Absorberrohre, auch insoweit in Serienfertigung vorbereitet werden können. Die beiden äußeren Absorberrohre 13 sind identisch geformt und müssen lediglich umgekehrt eingebaut werden.

Anstelle der Verschraubung der Anschlüsse 25, 25a, 25b mittels Verbindungselementen 25 etwa in Form von Überwurfmuttern ist auch eine andere Verbindung, etwa mittels formschlüssiger "plug & play" Verbindungen denkbar.

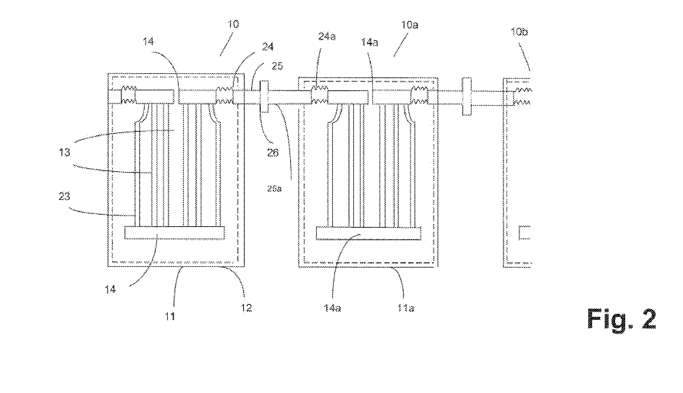

In der **Figur 2** ist eine andere Ausführungsform der Erfindung dargestellt.

Auch hier sieht man ein schematisch dargestelltes Feld mit mehreren aneinander angrenzenden Solarkollektoren 1 0, 10a und 10b. Die drei Solarkollektoren 10, 10a und 10b können auch hier technisch untereinander identisch aufgebaut sein. Weitere derartige Solarkollektoren schließen sich links und rechts von den drei dargestellten Solarkollektoren an.

Jeder der Solarkollektoren 10, 10a und 10b weist auch hier ein Gehäuse 11 auf. Wie in der Ausführungsform in der Figur 1 ist ein Absorberblech 12 vorgesehen, das die Sonneneinstrahlung aufnimmt und in Wärme umwandelt.

Mit den Absorberblechen oder-platten 12 sind Absorberrohre 13 verbunden. In der dargestellten Ausführungsform handelt es sich um sechs Absorberrohre 13 in jedem der Solarkollektoren 10, 10a, 10b, die jeweils in der Darstellung von der oberen Bildseite zur unteren Bildseite verlaufen.

Auch hier sind Sammlerrohre 14 vorgesehen. Jeweils ein Sammlerrohr 14 verläuft benachbart zur unteren Kante des Absorberblechs 12.

Anders als in der Ausführungsform aus der Figur 1 ist das zweite Sammlerrohr 14 benachbart zur oberen Kante des Absorberblechs 12 jedoch innerhalb eines jeden Solarkollektors 10 etwa in der Mitte geteilt. Man sieht in der dargestellten Ausführungsform in der Figur 2, dass daher drei Absorberrohre von dem unteren Sammlerrohr 14 zum links oben zu erkennenden Sammlerrohr 14 und drei andere Absorberrohre 13 von dem unteren Sammlerrohr 14 zu dem rechts oben zu erkennenden Sammlerrohr 14 verlaufen und so eine Verbindung herstellen.

Die Sammlerrohre 14 dienen dazu, die Fluide aus den einzelnen Absorberrohren 13 zu sammeln und gemeinsam aus einem Solarkollektor 10, 10a, 10b abzuführen beziehungsweise ein Fluid geschlossen in einen Solarkollektor 10, 10a, 10b hineinzuführen und auch in der Ausführungsform in der Figur 2 als Verteiler auf die einzelnen Absorberrohre 13 zu verteilen.

Man sieht, dass auch in der Ausführungsform in der Figur 2 der Inhalt eines Sammlerrohres 14 aus einem Solarkollektor in ein Sammlerrohr 14 aus dem benachbarten Solarkollektor überführt wird. Dabei wird konstruktiv zweckmäßig ein axialer Anschluss zwischen der rechten Hälfte eines oberen Sammlerrohrs 14 eines Solarkollektors 10 mit der linken Hälfte des oberen Sammlerrohrs 14a des unmittelbar rechts benachbarten Solarkollektors 10a vorgenommen.

Die unteren Sammlerrohre der beiden Solarkollektoren 10 und 10a werden nicht miteinander verbunden und enden innerhalb des Solarkollektors 10 beziehungsweise innerhalb des Solarkollektors 10a.

Während sich in der Ausführungsform der Figur 1 also eine Art Zick-Zack-Verlauf zwischen den Sammlerrohren benachbarter Solarkollektoren ergibt, wird in der Ausführungsform in der Figur 2 innerhalb eines Solarkollektors der Lauf des Fluides vom oberen Sammlerrohr zum unteren Sammlerrohr und aus diesem unteren Sammlerrohr durch andere Absorberrohre 13 wieder zurück zur anderen Hälfte des oberen Sammlerrohres 14 geführt und auf diese Weise jeweils auf der gleichen, oberen Seite eines Solarkollektors ein Anschluss benachbarter Solarkollektoren erzielt.

In einer nicht dargestellten alternativen Ausführungsform könnte natürlich auch ein Anschluss jeweils nur unten liegender Sammlerrohre 14 benachbarter Solarkollektoren vorgesehen sein, sodass die oberen Sammlerrohre 14 jeweils innerhalb eines Solarkollektors abgeschlossen sind.

Die als Wellrohr ausgeführten Längenabschnitte sind hier also jeweils nur in den oberen Sammlerrohren 14 (in der Figur 2) vorgesehen, da die unteren Sammlerrohre 14 die Solarkollektoren 10 nicht verlassen.

Im Übrigen entspricht die Ausführungsform aus der Figur 2 der aus der Figur 1, etwa hinsichtlich der Anschlüsse 25, 25a und 25b, die benachbart zu den Längenabschnitten 24, 24a, 24b der Sammlerrohre 14 den jeweiligen Anschluss zweier Sammlerrohre 14 aneinander ermöglichen.

Während die Figur 1 also eine Art Diagonalanschlüsse darstellt, handelt es sich in der Figur 2 um Anschlüsse auf gleicher Höhe.

Eine weitere, nicht dargestellte Bauform kann auch so aufgebaut werden, dass jeder Solarkollektor 10 vorsorglich so aufgebaut wird, dass ein Anschluss des benachbarten Solarkollektors am oberen Sammlerrohr 14 oder am unteren Sammlerrohr 14 vorgenommen werden kann, sodass dann abhängig von den Erfordernissen der Praxis jeder Solarkollektor entweder rechts oben und links unten oder rechts unten und links oben angeschlossen werden kann.

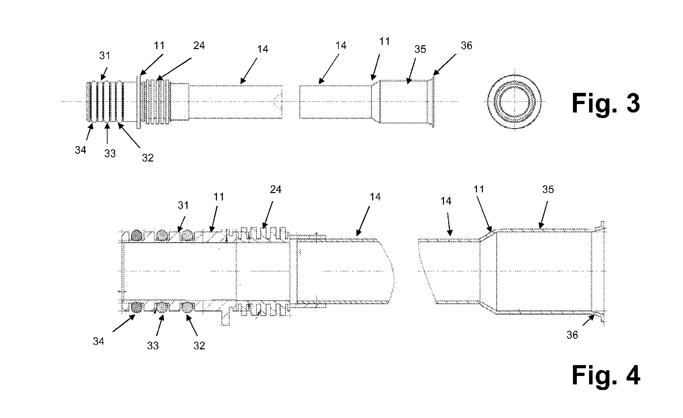

In der **Figur 3** sieht man den Bereich der Anschlüsse 25, 25a oder 25b etwas größer heraus gezeichnet, wobei hier das Gehäuse 11 des Solarkollektors 10 zur Verdeutlichung weggelassen ist.

Insgesamt ist ein Sammlerrohr 14 dargestellt, von dem man hier nur die dem Anschluss 25 benachbarten äußeren Bereiche sieht. Das Sammlerohr 14 kann insgesamt durchgehen, wobei hier auch eine abwechselnde Führung wie in den Figuren 1 und 2 möglich ist.

Man sieht nun auf der in der Figur 3 linken Seite, dass sich an das Sammlerrohr 14 ein Längenabschnitt 24 als Wellrohr anschließt. An diesem Längenabschnitt 24 beziehungsweise an diesem Wellrohrelement schließt sich nach links ein Bereich mit einem vergrößerten Außendurchmesser an, in welchem auch dieser Bereich des Sammlerrohrs 14 die Wandung des Gehäuses 11 passiert.

Weiter nach links schließt sich dann der Bereich für den Anschluss 25 des Solarkollektors 10 an einen benachbarten Solarkollektor an, und zwar in Form eines Drehteils oder Rohrelements 31, auf welchem drei O-Ringe 32, 33 und 34 sitzen. Das Drehteil oder Rohrelement 31 ist rohrförmig und besitzt ungefähr den gleichen Innendurchmesser und Außendurchmesser wir das Sammlerrohr 14.

In dem Sammlerrohr 14 ebenso wie in diesem Drehteil oder Rohrelement 31 kann das Fluid strömen.

Betrachtet man sich nun die rechte Hälfte des Sammlerrohrs 14, so schließt sich an dieses ein tulpenförmiges erweitertes Rohrelement 35 an. Zwischen dem Sammlerrohr 14 und dem tulpenförmigen erweiterten Rohrelement 35 wäre wieder die Wandung des Gehäuses 11 zu denken.

Das tulpenförmige erweiterte Rohrelement 35 endet schließlich in einer nochmaligen Erweiterung 36.

Zwei nebeneinander stehende Solarkollektoren 10 werden nun dadurch verbunden, dass das tulpenförmige erweiterte Rohrelement 35 des Anschlusses 25 des einen Solarkollektors 10 auf das Drehteil oder Rohrelement 31 mit den O-Ringen 32, 33 und 34 des benachbarten Solarkollektors 10 aufgeschoben wird.

Dadurch entsteht eine durchgehende Verbindung für das Fluid aus dem Sammlerrohr 14 des einen Solarkollektors 10 in das Rohrelement 31 und durch dieses hindurch in das Sammlerrohr 34 des benachbarten Solarkollektors 10. Dabei werden die Wandungen beider Gehäuse 11 passiert. Eine Abdichtung wird durch die drei O-Ringe 32, 33, 34 nach außen gewährleistet.

Eine Befestigung kann erfolgen, in dem etwa eine Schellenverriegelung (nicht dargestellt) über die Erweiterung 36 und die an dem Drehteil 31 angesetzte nach außen gerichtete Erweiterung gelegt wird.

In der **Figur 4** wird die Situation aus der Figur 3 nochmals vergrößert und darüber hinaus geschnitten dargestellt.

Man kann auch hier das beziehungsweise die Sammlerrohre 14 erkennen, jeweils nach links und rechts fortgesetzt mit den zusätzlichen Abschnitten des Wellrohrs 24, der Durchmessererweiterung im Bereich des Durchtritts durch das Gehäuse 11, sowie des Rohrelements 31 mit den drei O-Ringen 32, 33 und 34 auf der linken Seite. Auf der rechten Seite ist ebenfalls zu sehen, wie das Sammlerrohr 14 durch die Wandung des Gehäuses 11 des Solarkollektors 10 tritt und als tulpenförmig erweitertes Rohrelement 35 weitergeführt wird, das sich dann nochmals in einer Erweiterung 36 nach außen verbreitert.

### Bezugszeichenliste

- 10: Solarkollektor
- 10a: Solarkollektor
- 10b: Solarkollektor
- 11: Gehäuse des Solarkollektors 10
- 11a: Gehäuse des Solarkollektors 10a
- 11b: Gehäuse des Solarkollektors 10b
- 12: Absorberblech
- 13: Absorberrohr
- 14: Sammlerrohr des Solarkollektors 10
- 14a: Sammlerrohr des Solarkollektors 10a
- 14b: Sammlerrohr des Solarkollektors 10b

- 23: Biegung eines Absorberrohrs benachbart zum Gehäuse
- 24: Längenabschnitt des Sammlerrohrs 14 als Wellrohr
- 24a: Längenabschnitt des Sammlerrohrs 14a als Wellrohr
- 24b: Längenabschnitt des Sammlerrohrs 14b als Wellrohr
- 25: Anschluss des Solarkollektors 10
- 25a: Anschluss des Solarkollektors 10a
- 25b: Anschluss des Solarkollektors 10b
- 26: Verbindungselement, beispielsweise Überwurfmutter

- 31: Rohrelement
- 32: Dichtelement, insbesondere O-Ring
- 33: Dichtelement, insbesondere O-Ring
- 34: Dichtelement, insbesondere O-Ring
- 35: tulpenförmig erweitertes Rohrelement
- 36: Erweiterung

## Patentansprüche

1. Solarkollektor (10, 10a, 10b)
mit einem Gehäuse (11, 11a, 11b),
mit einer Absorberplatte (12),
mit Absorberrohren (13), die mit der Absorberplatte (12) wärmeleitend verbunden sind,
mit zwei Sammlerrohren (14, 14a, 14b), zwischen denen die Absorberrohre (13) verlaufen und die ein Fluid in den Solarkollektor (10, 10a, 10b) hinein und aus diesem heraus führen,
sowie mit einer Verbindungsmöglichkeit von den Sammlerrohren (14) zu den Sammlerrohren (14) in einem der benachbarten Solarkollektoren (10, 10a, 10b),
unter Verwendung eines als Wellrohr ausgebildeten Abschnittes,
**dadurch gekennzeichnet,**
**dass** jedes durch die Gehäusewandung geführte Sammlerrohr (14, 14a, 14b) in einem Längenabschnitt (24, 24a, 24b) innerhalb und unmittelbar angrenzend am Gehäuse (11) des Solarkollektors (10, 10a, 10b) als flexibles Wellrohr ausgeführt ist,
**dass** der als flexibles Wellrohr ausgeführte Längenabschnitt (24, 24a, 24b) des Sammlerrohrs (14, 14a, 14b) sich von der Innenwand des Gehäuses (10) bis zum Abzweig des ersten Absorberrohrs (13) von dem jeweiligen Sammlerrohr (14, 14a, 14b) oder über eine Teilstrecke davon erstreckt, und
**dass** in der Gehäusewandung oder auf der Außenseite des Gehäuses (11) des Solarkollektors (10, 10a, 10b) ein fester Anschluss (25, 25a, 25b) vorgesehen ist, welcher direkt oder unter Zwischenschaltung der Gehäusewandung an den als Wellrohr ausgeführten Längenabschnitt (24, 24a, 24b) des Sammlerrohrs (14, 14a, 14b) anschließt.

2. Solarkollektor (10, 10a, 10b) nach Anspruch 1,
**dadurch gekennzeichnet,**
**dass** der Anschluss (25, 25a, 25b) so ausgebildet ist, dass ein Verbindungselement (26), insbesondere eine Überwurfmutter zwei benachbarte Anschlüsse von zwei benachbarten Solarkollektoren (10, 10a, 10b) fest und dicht verbinden kann.

3. Solarkollektor (10, 10a, 10b) nach Anspruch 1,
**dadurch gekennzeichnet,**
**dass** die Anschlüsse (25, 25a, 25b) so ausgebildet sind, dass die Anschlüsse zweier benachbarter Solarkollektoren (10, 10a, 10b) mittels "plug & play" verbindbar gestaltet sind.

4. Solarkollektor (10, 10a, 10b) nach einem der vorstehenden Ansprüche,
**dadurch gekennzeichnet,**
**dass** ein Anschluss (25) auf der einen Seite des Solarkollektors (10) ein aus dem Gehäuse (11) herausragendes Rohrelement (31) mit auf diesem Rohrelement (31) angeordneten Dichtelementen (32, 33, 34) aufweist, dass ein Anschluss (25) auf der anderen Seite des Solarkollektors (10) eine gegenüber dem Sammlerrohr (14) erweitertes Rohrelement (35) aufweist, dass das erweiterte Rohrelement (35) über das Rohrelement (31) mit den Dichtelementen (32, 33, 34) schiebbar ist, wobei die Dichtelemente (32, 33, 34) die beiden Rohrelemente (31, 36) gegeneinander abdichten, und dass ein Befestigungselement vorgesehen und so angeordnet ist, dass eine Verschiebung der beiden Rohrelemente (35, 36) relativ zueinander unterbunden wird.

5. Solarkollektor (10, 10a, 10b) nach Anspruch 4,
**dadurch gekennzeichnet,**
**dass** die Dichtelemente (32, 33, 34) O-Ringe sind, die auf dem Umfang des ersten Rohrelements (31) vorzugsweise in vorgesehenen Nuten umlaufend angeordnet sind.

6. Solarkollektor (10, 10a, 10b) nach Anspruch 5,
**dadurch gekennzeichnet,**
**dass** drei O-Ringe (32, 33, 34) als Dichtelemente vorgesehen sind.

7. Solarkollektor (10, 10a, 10b) nach Anspruch 4, 5 oder 6,
**dadurch gekennzeichnet,**
**dass** das erweiterte Rohrelement (35) an seinem dem Solarkollektor (10) abgewandten Ende eine zusätzliche Erweiterung (36) aufweist,
**dass** das erste Rohrelement (31) mit den Dichtelementen (32, 33, 34) auf der dem Solarkollektor (10) zugewandten Ende eine Erweiterung benachbart zum Gehäuse (11) aufweist, und
**dass** das Befestigungselement die beiden Erweiterungen übergreift.

8. Solarkollektor (10, 10a, 10b) nach einem der vorstehenden Ansprüche,
**dadurch gekennzeichnet,**
**dass** die Absorberrohre (13) im Wesentlichen parallel zueinander und parallel zu jeweils zwei Wänden eines im Wesentlichen rechteckigen Gehäuses (11) ausgeführt sind, und
**dass** dabei die Absorberrohre (13), die am dichtesten benachbart zur Innenwand des Gehäuses (11) verlaufen, vor ihrer Einmündung in das Sammlerrohr (14, 14a, 14b) vom Gehäuse (11) weg verlaufen und so einem als Wellrohr ausgebildeten Längenabschnitt (24, 24a, 24b) des Sammlerrohrs vor ihrer Einmündung in dieses Sammlerrohr ausweichen.

9. Solarkollektor (10, 10a, 10b) nach einem der vorstehenden Ansprüche,
**dadurch gekennzeichnet,**
**dass** die Sammlerrohre (14, 14a, 14b) mit den Anschlüssen (25, 25a, 25b) und den an den Anschlüssen benachbarten als flexibles Wellrohr ausgeführten Längenabschnitten (24, 24a, 24b) so ausgebildet sind, dass die beiden Anschlüsse eines Solarkollektors einander diagonal gegenüberliegen, sodass der Fluidverlauf durch benachbarte Solarkollektoren nach deren Verbinden zickzackförmig verläuft.

10. Solarkollektor (10, 10a, 10b) nach einem der Ansprüche 1 bis 8,
**dadurch gekennzeichnet,**
**dass** eines der beiden Sammlerrohre (14, 14a, 14b) eines jeden Solarkollektors zweigeteilt ist, wobei jede der beiden Hälften dieses Sammlerrohrs mit einem der beiden Anschlüsse (25, 25a, 25b) verbunden ist und den als Wellrohr ausgeführten an den Anschluss angrenzenden Längenabschnitt (24, 24a, 24b) enthält, und
**dass** das andere Sammlerrohr (14, 14a, 14b) des gleichen Solarkollektors einstückig ausgeführt und nicht unmittelbar, sondern nur über die zwischen den Sammlerrohren verlaufenden Absorberrohre (13) mit einem Anschluss (25, 25a, 25b) und dem zugeordneten als Wellrohr ausgebildeten Längenabschnitt (24, 24a, 24b) verbunden ist.
